# EUROPÄISCHE PATENTANMELDUNG

(11) **EP 0 972 677 A2**
(43) Veröffentlichungstag der Anmeldung: **19.01.2000**
(21) Anmeldenummer: 99111622.9
(22) Anmeldetag: 16.06.1999
(51) Int. Cl.: B60Q 1/26

(54) **Fahrzeugleuchte**

(30) Priorität: 12.05.1999 DE 19921909; 17.07.1998 DE 19832200
(71) Anmelder: Hella KG Hueck & Co., 59552 Lippstadt (DE)
(72) Erfinder: Vögeler, Franz-Josef, 59555 Lippstadt (DE)

(57) **Zusammenfassung**

Fahrzeugleuchte mit einer Mehrzahl von auf einem Abdeckelement angeordneten Leuchtdioden, die in Richtung einer Abschlußscheibe eines Gehäuses abstrahlen, wobei die Leuchtdioden mit ihren elektrischen Kontakten oder über als elektrische Zuleitung dienenden Kontalktelementen an einem Randbereich von Öffnungen gehaltert sind, die in ein Abdeckelement eingebracht sind.

Verfahren zur Montage einer Mehrzahl von Leuchtdioden an einem Abdeckelement einer Fahrzeugleuchte, dadurch gekennzeichnet, daß die Leuchtdioden in einer Fertigungsstraße vollautomatisch von einem Montageroboter auf einer Seite des Abdeckelements befestigt werden.

## Beschreibung

Die Erfindung betrifft eine Fahrzeugleuchte mit einem eine Mehrzahl von Leuchtdioden aufnehmenden Gehäuse, mit einer die Vorderseite des Gehäuses abschließenden Abschlußscheibe und mit einem Abdeckelement, welches den Leuchtdioden zugeordnete Öffnungen aufweist.

Die Erfindung betrifft weiterhin ein Verfahren zur Montage einer Mehrzahl von Leuchtdioden in einem Abdeckelement eines Gehäuses einer Fahrzeugleuchte.

Aus der EP 0 633 163 A1 ist eine Fahrzeugleuchte bekannt, bei der eine Mehrzahl von Leuchtdioden, die in Richtung einer als Gehäusevorderseite dienenden Abschlußscheibe abstrahlen, auf ebenen Leiteplatten gehaltert sind. Die Leiterplatten sind im Inneren des Gehäuses der Fahrzeugleuche angeordnet und auf der Rückseite eines Abdeckelements angeordnet, das für einen Betrachter auf der Vorderseite der Leuchte die Sicht auf die Leiterplatten abschirmt. Die Leuchtdioden sind auf der Rückseite des Abdeckelements angeordnet, das für die Leuchdioden zugeordnete kleine Öffnungen aufweist.

Nachteilig bei der bekannten Fahrzeugleuchte ist, daß die Leuchtdioden auf den Trägerplatten jeweils in einer Ebene angeordnet sind, so daß eine Vielzahl von Trägerplatten für eine räumliche Anordnung einer fahrzeugangepaßten Fahrzeugleuchte benötigt wird. Dies führt zu einer aufwendigen, komplizierten und kostenintensiven Montage. Die Fahrzeugleuchte benötigt zudem eine relativ hohe Bautiefe.

Aufgabe der vorliegenden Erfindung ist es daher, die bekannte Fahrzeugleuchte so zu verbessern, daß sie einfacher montiert werden kann und mit einer geringeren Bautiefe auskommt.

Diese Aufgabe wird erfindungsgemäß dadurch gelöst, daß die Leuchtdioden mit ihren elektrischen Kontakten oder mit als elektrische Zuleitung dienenden Kontaktelementen an einem Randbereich der Öffnungen des Abdeckelements gehaltert sind.

Dadurch, daß die Leuchtdioden direkt an dem Abdeckelement befestigt sind, wird praktisch nur ein Trägerelement benötigt, das im Inneren des Gehäuses angeordnet ist oder die Gehäuserückseite bildet. Außerdem wird die Montage erheblich vereinfacht und zugleich die Bautiefe verringert. Die Fahrzeugleuchte kann somit beispielsweise als platzsparende fahrzeugangepaßte Heckleuchte verwendet werden. Die Öffnung in dem Abdeckelement kann auch von einer in das Abdeckelement eingebrachten Vertiefung gebildet sein, die zur Aufnahme der Leuchtdiode selbst und/oder ihrer Kontakte dient.

Gemäß einer bevorzugten Ausführungsform der Erfindung werden die Leuchtdioden auf der der Abschlußscheibe abgewandten Rückseite an ihren Kontakten von Kontaktelementen kontaktiert und zusammen mit den Kontaktelementen an dem Abdeckelement gehaltert. Dadurch wird eine gute Zugänglichkeit der Kontakte erzielt, die eine kostengünstige automatische Kontaktierung in einer Fertigungsstraße unter Verwendung eines Montageroboters ermöglicht.

Nach einer weiteren bevorzugten Ausführungsform der Erfindung liegen die Leuchtdioden auf der Rückseite des Abdeckelements an einem Randbereich der Öffnungen des Abdeckelements an. Dadurch kann das Anordnen und Kontaktieren der Leuchtdioden auf der gleichen Seite des Abdeckelements erfolgen. Dabei können die als elektrische Zuleitung für die Leuchtdioden dienenden Kontaktelemente entweder zwischen den Kontakten der Leuchtdioden oder auf der dem Abdeckelement abgewandten Seite der Kontakte der Leuchtdioden angeordnet sein. Die elektrische Verbindung zwischen den Kontaktelementen und den Kontakten der Leuchtdioden kann durch Schweißen (z.B. Laser- oder Punktschweißen) hergestellt sein.

Bei Leuchtdioden, die mit ihren Kontakten an dem rückwärtigen Randbereich der Öfflnungen des Abdeckelements anliegen, ist es weiterhin vorteilhaft, wenn die Leuchtdioden in die Öffnungen des Abdeckelements eintauchen oder von der Rückseite des Abdeckelements durch die Öffnungen hindurchgesteckt sind, wobei jede Leuchtdiode im Inneren eines ihr zugeordneten Reflektors des Abdeckelements angeordnet ist. Hierbei sind die Reflektoren von der Vorderseite des Abdeckelements gebildet und die Leuchtdioden können mit ihrer Lichtquelle sehr nahe dem Brennort des jeweiligen Reflektors angeordnet sein. Dadurch werden auch die seitlich aus der Leuchtdiode austretenden Lichtstrahlen mit ausgenutzt.

Weiterhin ist es vorteilhaft, wenn die Leuchtdioden und die als elektrische Zuleitung dienende Kontaktelemente zwischen Ansätzen des Abdeckelements fixiert sind. Die Ansätze können durch Warmprägen pilzförmig verformt sein und die Leuchdioden und die Kontaktelemente übergreifen und somit die Leuchtdioden und die Kontaktelemente sicher an dem Abdeckelement haltern. Desweiteren denkbar ist ein Verschmelzen der Ansätze durch Laserstrahl. Das würde eine Befestigung bedeuten, die ohne zusätzlichen Vorrichtungsaufwand erfolgen kann. Die Kontaktelemente können zu den Ansätzen auch verklebt sein. Vorstellbar ist auch ein Ausschäumen der Rückseite des Abdeckelements. Dies bedeuted eine Abdichtung, elektrische Isolierung, sowie Fixierung der Bauteile in einem Arbeitsgang.

Weitere Aufgabe der Erfindung ist es, die bekannten Verfahren zur Montage einer Mehrzahl von Leuchtdioden an einem Abdeckelement einer Fahrzeugleuchte zu verbessern. Diese Aufgabe wird erfindungsgemäß dadurch gelöst, daß die Leuchtdioden in einer Fertigungsstraße vollautomatisch von einem Montageroboter in räumlicher Anordnung auf der Rückseite des Abdeckelements befestigt werden. Dadurch, daß die Leuchtdioden vollautomatisch in räumlicher Anordnung direkt auf der Rückseite des Abdeckelements befestigt werden, wird der Montagevorgang erheblich vereinfacht.

Nach einer weiteren bevorzugten Ausführungsform der Erfindung wird durch einen Montageroboter auf einer der Abschlußscheibe abgewandten Rückseite des Abdeckelements die elektrische Verbindung zu den Leuchtdioden hergestellt. Dadurch sind die Kontakte leicht zugänglich und können relativ kostengünstig von einem Montageroboter kontaktiert werden.

Weitere Einzelheiten der Erfindung ergeben sich aus der nachfolgenden ausführlichen Beschreibung und den beigefügten Zeichnungen, in denen bevorzugte Ausführungsformen der Erfindung beispielsweise veranschaulicht sind.

In den Zeichnungen zeigen:
- Figur 1:: Eine Draufsicht auf eine Fahrzeugleuchte im Schnitt,
- Figur 2:: eine Draufsicht auf ein Abdeckelement in vergrößerter Darstellung mit auf der Rückseite des Abdeckelements angeordneten Leuchtdioden, die mit Kontaktelementen (sogenannten Bond-Drähten) kontaktiert sind,
- Figur 3:: in einer Teilansicht einen Schnitt im vergrößerten Maßstab durch ein Abdeckelement einer an seiner Voderseite angeordneten Leuchtdiode, die auf der Rückseite des Abdeckelements mittels Klemmtechnik kontaktiert ist,
- Figur 4:: eine Rückansicht des Abdeckelements von Figur 3 aus Richtung IV,
- Figur 5:: in einer Teilansicht einen Schnitt durch ein Abdeckelement in vergrößerter Darstellung mit einer in Rasttechnik kontaktierten Leuchtdiode,
- Figur 6:: eine Ansicht der Kontakte an der Rückseite des Abdeckelements von Figur 5 aus Richtung VI,
- Figur 7:: in einer Teilansicht einen Schnitt durch ein Abdeckelement mit einer in Draht-Wickel-Technik kontaktierten Leuchtdiode in vergrößerter Darstellung,
- Figur 8:: in einer Teilansicht einen Schnitt durch ein Abdeckelement mit einer Leuchtdiode, die durch Draht-Punkt-Schweißen kontaktiert ist in vergrößerter Darstellung,
- Figur 9:: eine Ansicht einer Rückseite eines Abdeckelements in vergrößerter Darstellung, deren Leuchtdiode von der Vorderseite des Abdeckelements montiert ist, wobei durchgehende Stanzstreifen eine Aufnahme bilden, die als eine Art Quetschsockel ausgebildet ist,
- Figur 10:: eine Ansicht der Rückseite des Abdeckelements von Figur 9 entlang der Linie X - X geschnitten,
- Figur 11:: eine Draufsicht auf eine Gehäuserückseite im Schnitt in vergrößerter Darstellung mit auf der Rückseite des Abdeckelements angeordneten Stanzstreifen zur Kontaktierung,
- Figur 12:: eine Ansicht der Gehäuserückseite von Figur 11 aus Richtung XII,
- Figur 13:: eine Draufsicht auf eine Gehäuserückseite im Schnitt in vergrößerter Darstellung mit Quetschsockeln als Aufnahmeelement und an der Außenseite der Gehäuserückseite punktgeschweißten Drähten zur Kontaktierung,
- Figur 14:: eine Teilansicht eines Abdeckelements im Schnitt in vergrößerter Darstellung mit an der Rückseite des Abdeckelements angeordneten Quetschsockeln als Aufnahmeelemente, die von Bond-Drähten kontaktiert sind.
- Figur 15:: eine Ansicht der Rückseite des Abdeckelements von Figur 14 aus Richtung XV,
- Figur 16:: in einer Teilansicht ein aus Blech bestehendes Abdeckelement in vergrößerter Darstellung mit einer genieteten Leuchtdiode
- Figur 17:: eine vergrößerte Darstellung der Nietverbindung von Figur 16,
- Figur 18:: eine Teilansicht einer Leuchtdiode mit einem verpreßten Blechträgerteil in vergrößerter Darstellung,
- Figur 19:: eine vergrößerte Darstellung der Preßverbindung von Figur 18,
- Figur 20:: in einer Teilansicht einen Schnitt durch ein Abdeckelement mit einer auf der Voderseite des Abdeckelements leitend mit der Vorderseite verbundenen Leuchtdiode in vergrößerter Darstellung,
- Figur 21:: eine Draufsicht auf eine Rückseite des Abeckelements in vergrößerter Darstellung mit einer von der Rückseite des Abeckelements auf das Abdeckelement aufgesetzten und mit der Rückseite leitend verbundene Leuchtdiode,
- Figur 22:: eine Teilansicht auf eine Rückseite eines Abdeckelements mit einer von der Rückseite auf das Abdeckelement geklebten Leuchtdiode in vergrößerter Darstellung,
- Figur 23:: eine Draufsicht der Leuchtdiode von Figur 22, entlang der Linie XXIII - XXIII geschnitten,
- Figur 24:: eine Draufsicht auf eine Fahrzeugleuchte im Schnitt, bei der mehrere Leuchtdioden zu einem gemeinsamen Block zusammengefaßt sind und
- Figur 25: eine Teilansicht auf eine Rückansicht eines Abdeckelements mit von der Rückseite des Abdeckelements montierten und in Öffnungen des Abdeckelements eingetauchten Leuchtdioden,
- Figur 26: einen Längsschnitt durch zwei Leuchdioden von Figur 25, die durch verformte Ansätze des Abdeckelements gehaltert sind und
- Figur 27: einen Längsschnitt durch zwei Leuchdioden, die mit einem Abdeckteil verklebt sind.

Eine Fahrzeugleuchte (1) besteht im wesentlichen aus einem Gehäuse (2) und einer Mehrzahl von Leuchtdioden (3).

Das Gehäuse (2) wird im wesentlichen von einer in Abstrahlrichtung der Leuchtdioden liegenden Abschlußscheibe (4) und von einer der Abschlußscheibe (4) abgewandten Gehäuserückseite (31) gebildet. Die Gehäuserückseite (31) ist von einem Gehäussedeckel gebildet. Für die Leuchtdioden (3) dient als ein Trägerelement ein im Inneren des Gehäuses (2) angeordnetes Abdeckelement (5), welches den Leuchtdioden (3) zugeordnete Öffnungen (27) aufweist. In den Öffnungen (27) können die Leuchtdioden (3) selbst oder nur ihre Kontakte (8) angeordnet sein. Als Abdeckelement (5) kann auch die Rückseite des Gehäuses (2) selbst dienen. Die Leuchtdioden (3) können sowohl auf der Vorderseite als auch auf der Rückseite des Abdeckelements (5) in Vertiefungen (14) des Abdeckelements (5) angeordnet sein.

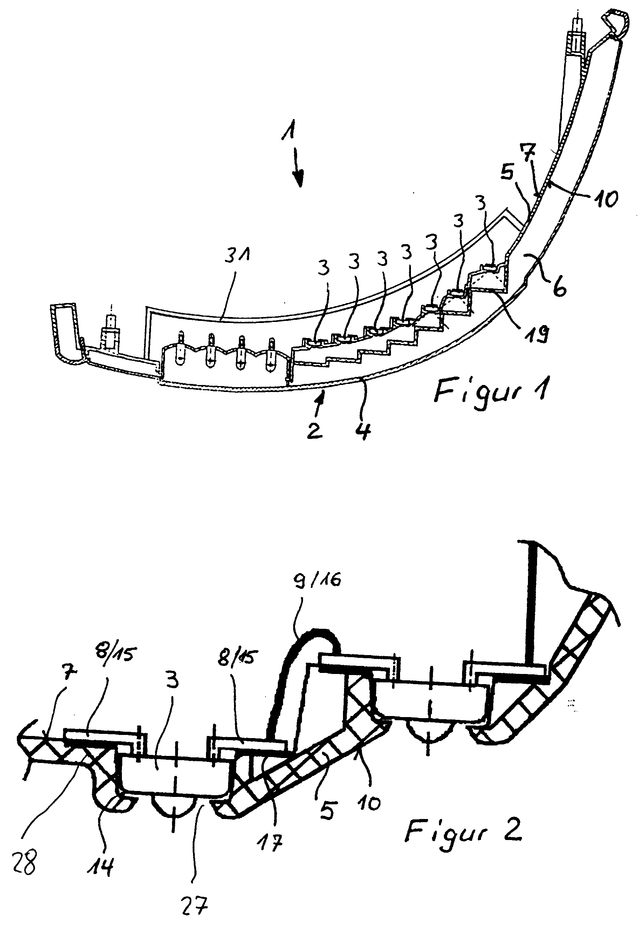

Nach einer ersten Ausführungsform sind auf einer Rückseite eines Abdeckelements (5) die Leuchtdioden (3) an ihren Kontakten (8) von Kontaktelementen (9) kontaktiert, siehe beispielsweise Figur 2, 21, 22.

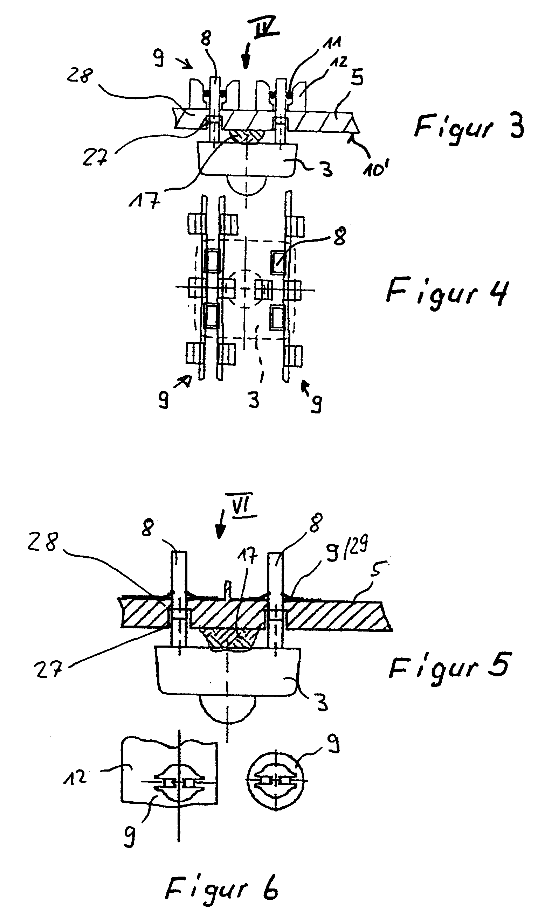

Nach einer anderen Ausführungsform der Erfindung werden auf einer Vorderseite eines Abdeckelements (5) die Leuchtdioden (3) auf ihren Kontakten (8) von Kontaktelementen (9) kontaktiert, siehe insbesondere Figur 3, 5, 7, 8. Dabei sind die Kontakte (8) als winkelförmige Füße, sogenannte "Entenlatschen", bzw. als gerade Füße ausgebildet. Die Kontaktelemente (9) sind beispielsweise als Draht (16) oder als gestanzte Blechstreifen (12) ausgebildet, siehe Figur 3.

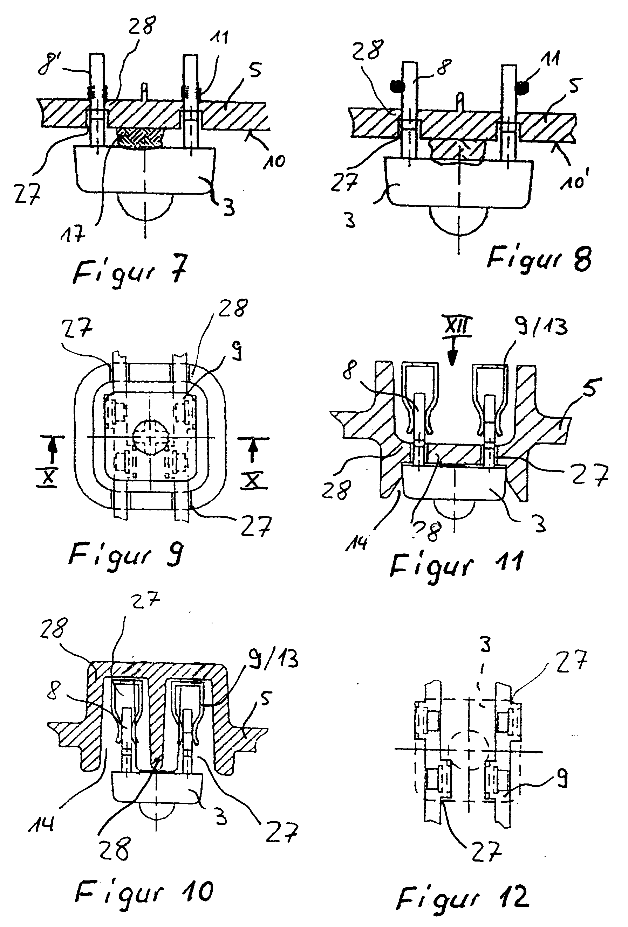

Nach einer anderen Ausführungsform sind die Kontaktelemente (9) als federnde Kontakte (13) ausgebildet, die von beiden Seiten die Kontakte (8) der Leuchtdioden (3) kontaktieren, siehe Figur 10, 11, 13.

In Figur 5, 6 ist das Kontaktelement (9) als Rastelement (29) ausgebildet, das klemmend auf die Kontakte (8) wirkt.

Nach einer Ausführungsform sind die Leuchtdioden (3) auf der Rückseite (7) des Abdeckelements (5) angeordnet. Die Leuchtdioden (3) sind auf der Rückseite (7) in Vertiefungen (14) angeordnet. Die Leuchtdioden (3) sind nach einer anderen Ausführungsform auf der Vorderseite (10) des Abdeckelements (5) angeordnet.

Die Leuchtdioden (3) können in Reihe oder parallel geschaltet werden. Die Leuchtdioden (3) sind mit einer nicht dargestellten Zentralelektronik verbunden, die für unterschiedliche Fahrzeuge vereinheitlicht sein kann. Zur Abschlußscheibe hin kann den Leuchtdioden (3) ein optisches Element (19) vorgelagert sein.

In Figur 2 enthält die Rückseite des Abdeckelements (5) Aufnahmen (14) zur Aufnahme der Leuchtdioden (3), die als Lumineszensdioden LED ausgebildet sind. Die LED's sind als sogenannte "Snap-LED's" ausgebildet, wie sie beispielsweise in den Figuren 16 bis 19 und 21 bis 23 dargestellt sind. Die Vorderseite des Abdeckelements (5) ist metallisiert.

Die Leuchtdioden (3) werden von einen Montageroboter vollautomatisch zur Rückseite des Abdeckelements (5) gefügt und mit einem wärmeleitenden - nicht elektrisch leitenden - Kleber (17) zwischen "LED- Entenlatschen" (15) und der Gehäusebeschichtung fixiert. Als nächster Schritt wird mittels Montageroboter die elektrische Verbindung zwischen den Leuchtdioden (3) hergestellt. Das aus der Halbleitertechnik bekannte "Bonden" durch Aufbringen von Bonddrähten (20) kann hier ebenfalls zum Einsatz kommen, wie auch eine Punktschweißtechnik mittels punktgeschweißter Drähte (11). Das Kontaktieren des Kontaktdrahtes (16) mit den Entenlatschen (15) der Leuchtdioden (3) kann beispielsweise durch Verlöten oder Verschweißen mittels Laserstrahl erfolgen.

Die nicht dargestellte Fertigungsstraße ist für eine Vielzahl von unterschiedlichen Geräten problemlos auszulegen. Die unterschiedlichen Geräteträger, die auf das jeweilige Gerät abgestimmt sind, werden mit einem Strichcode oder ähnlichem versehen. Der Montageroboter weiß also, welches Montage- und Kontaktierungsprogramm er aktivieren muß. Durch die Einzelmontage und Einzelkontaktierung können Werkzeuge für Kontaktelemente und somit Kosten gespart werden. Durch die Metallisierung des Abdeckelements (5) ist eine vollflächige Wärmeableitung möglich.

Die Leuchtdioden (3), wie sie in den Figuren 3 bis 15 dargestellt sind, können auch von der Vorderseite des Abdeckelements (5) her zum Abdeckelement (5) gefügt und mit einem Kleber (17) an dem Randbereich der Öffnungen (27) auf der Vorderseite (10) befestigt werden. Kontaktelemente (9) können der Draht (11) und der gestanzte Blechstreifen (12) sein.

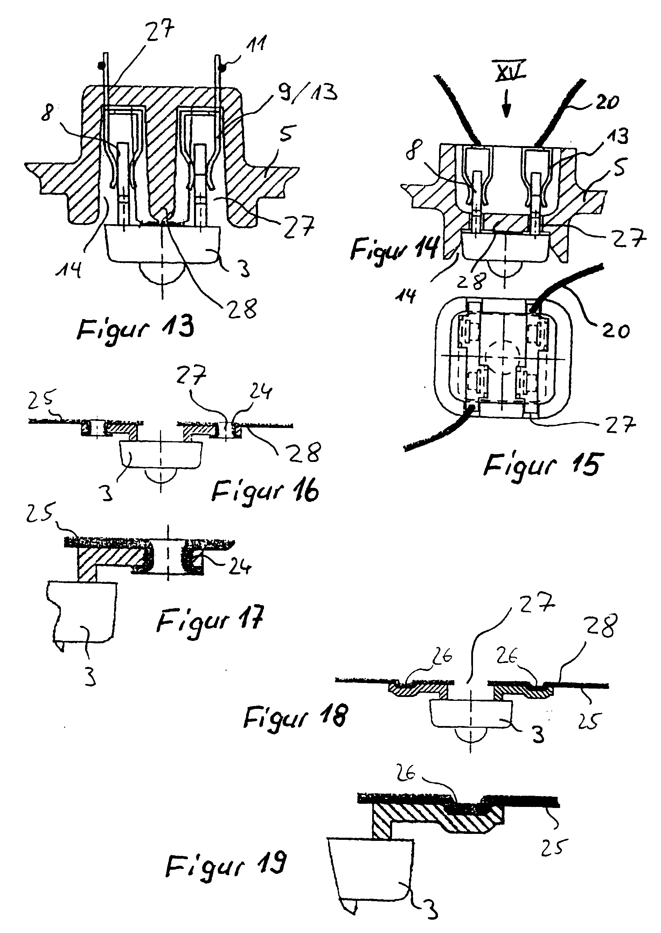

Die Vorderseite (10) (siehe Figur 10, 13) bzw. die Rückseite (7) (siehe Figuren 2, 11, 14, 21) des Abdeckelements (5) enthält die Vertiefungen (14) für die Kontaktelemente (9).

Zur Kontaktierung der Kontakte (8) kann auch - wie schematisch in Figur 7 dargestellt - eine Drahtwickeltechnik bzw. ein Wire-Wrap-Verfahren mit einem umwickelten Draht (11) verwendet werden.

Auch ist ein Draht-Punkt-Schweißen mit dem punktgeschweißten Draht (11), wie beispielsweise in Figur 8 dargestellt, möglich.

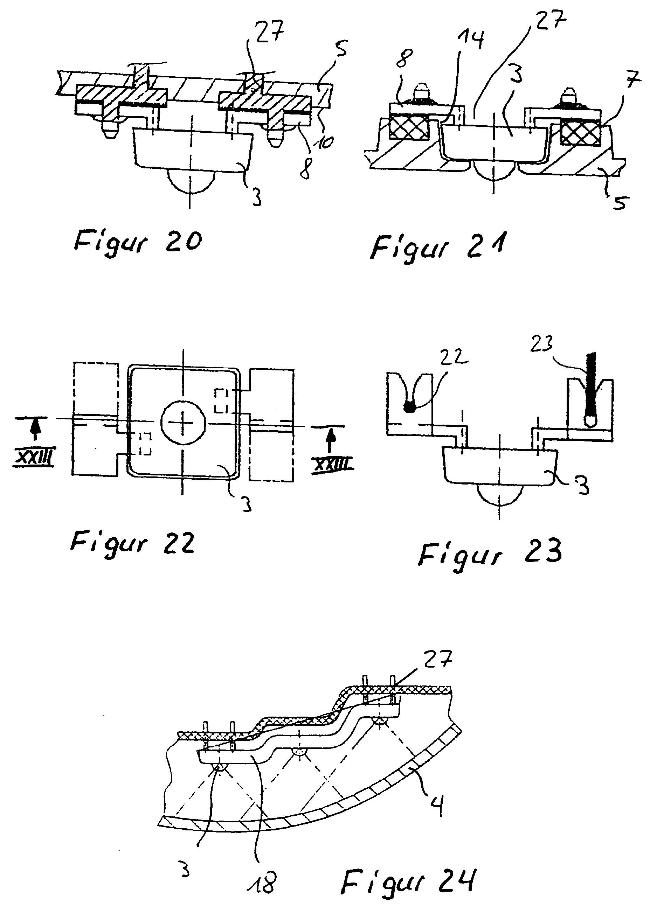

Wie aus Figur 23 ersichtlich, kann die Kontaktierung der Snap-LED's (3) zum einen durch einen Draht (22) und/oder durch einen Blechstreifen (23) erfolgen.

Die Figuren 16 und 17 zeigen eine LED (3), die mittels einer Nietverbindung (24) mit einem Blechträgerteil (25) verbunden ist. Der Blechträgerteil (25) wirkt stabilisierend und ist mit dem Abdeckelement (5) verbunden. Alternativ kann die LED (3) auch mit dem Blechträgerteil (25) durch ein Preßverbindung (26) verbunden sein, siehe Figur 18, 19.

In Figur 24 sind mehrere Leuchtdioden (3) auf einem gemeinsamen Block (18) angeordnet, der zusammen mit nicht dargestellten erforderlichen Elektronik-Elementen der Vorderseite (10) des Abdeckelements (5) vorgelagert wird. Der Block (18) wird an dem Abdeckelement (5) montiert und auf der Rückseite (7) kontaktiert.

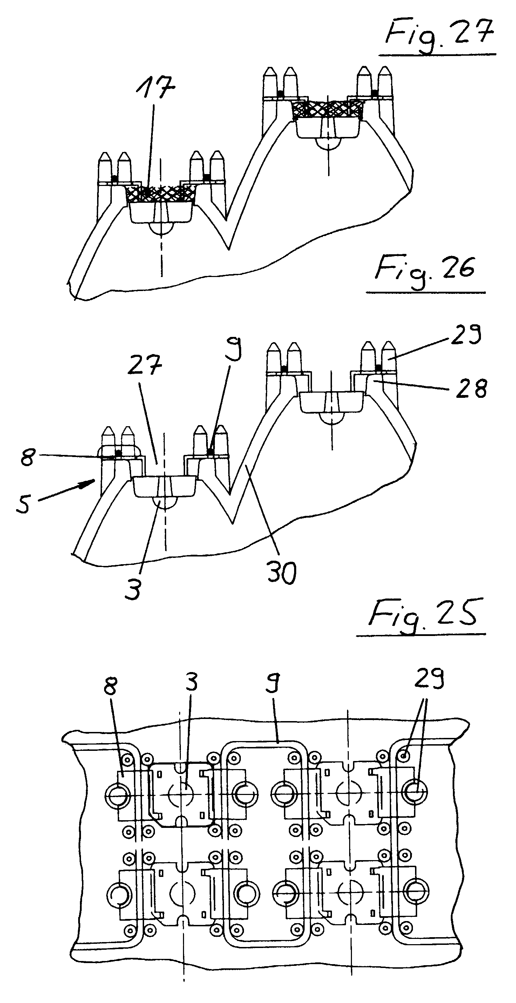

In den Figuren 25 und 26 ist eine Fahrzeugleuchte dargestellt, bei der ein Abdeckelement (5) selbst Reflektoren (30) für die Leuchtdioden (3) bildet. In den Scheitelbereich der Reflektoren (30) ist jeweils eine Öffnung (27) eingebracht, durch welche von der Rückseite des Abdeckteils (5) her die Leuchtdioden (3) eingeführt sind und mit ihrer Lichtquelle im Brennort der Reflektoren (30) liegen. Die Leuchtdioden (3) ragen auf der Vorderseite des Abdeckelements (5) aus den Öffnungen (27) heraus. Dadurch werden auch die seitlich abgestrahlten Lichtstrahlen der Leuchtdioden (3) von den Reflektoren (30) erfaßt und zur Abschlußscheibe (4) hinreflektiert. Nach dem Einstecken der Leuchtdioden (3) in die Öffnungen (27) des Abdeckelements (5) liegen die Leuchtdioden mit ihren Kontakten (8) (Entenlatschen) an dem rückwärtigen Randberich (28) der Öffnungen (27) an. Dadurch sind die Leuchtdioden zu den Reflektoren (30) genau fixiert. Die Leuchtdioden (3) sind durch Ansätze (29) an der Rückseite des Abdeckelements (5) gehaltert. Der freie Endabschnitt der Ansätze (29) ist durch Wärmeprägung pilzförmig geformt und übergreift die Kontakte (8) der Leuchtdioden (3). Die als Zuleitung dienenden Kontaktelemente (9) sind von Drähten gebildet, welche zwischen weiteren Ansätzen (29) des Abdeckelements (5) fixiert sind. Die Ansätze (29) für die Kontaktelemente (9) weisen noch keine Pilzform durch Warmprägen auf Die Kontaktelemente (9) verlaufen auf der dem Abdeckelement (5) abgewandten Seite der Kontakte (8) und sind durch Laserschweißen mit den Kontakten (8) verbunden. Die Drähte können auch zwischen den Kontakten (8) der Leuchtdioden (3) und dem Abdeckelement (5) verlaufen.

Bei dem in Figur 27 dargestellten Abdeckelement (5), welches im wesentlichen dem von Figur 26 entspricht, ist eine von den Öffnungen (27) und der Rückseite der Leuchtdioden (3) gebildete Vertiefung mit Klebstoff (17) ausgefüllt.

## Patentansprüche

1. Fahrzeugleuchte mit einem eine Mehrzahl von Leuchtdioden (3) aufnehmenden Gehäuse (2), mit einer die Vorderseite des Gehäuses (2) abschließenden Abschlußscheibe (4) und mit einem Abdeckelement (5), welches Öffnungen (27) für die Leuchtdioden (3) aufweist, dadurch gekennzeichnet, daß die Leuchtdioden (3) mit ihren elektrischen Kontakten (8) oder über als elektrische Zuleitungen dienende Kontaktelemente (9) an dem Randbereich der Öffnungen (27) des Abdeckelements (5) gehaltert sind.

2. Fahrzeugleuchte nach Anspruch 1, dadurch gekennzeichnet, daß die Kontaktelemente (9) an dem Abdeckelement (5) gehaltert sind und die Leuchtdioden (3 ) auf der Rückseite oder Vorderseite (10) des Abdeckelements (5) mit ihren Kontakten (8) mit den Kontaktelementen (9) kontaktieren.

3. Fahrzeugleuchte nach Anspruch 2, dadurch gekennzeichnet, daß die Kontaktelemente (9) als Draht (11, 16) ausgebildet sind.

4. Fahrzeugleuchte nach Anspruch 2, dadurch gekennzeichnet, daß die Kontaktelemente (9) von Kontaktstreifen (12) gebildet sind.

5. Fahrzeugleuchte nach Anspruch 2, dadurch gekennzeichnet, daß die Kontaktelemente (9) als federnde Kontakte (13) ausgebildet sind.

6. Fahrzeugleuchte nach einem der Ansprüche 2 bis 5, dadurch gekennzeichnet, daß die Leuchtdioden (3) auf einer der Abschlußscheibe (4) zugewandten Vorderseite (10) des Abdeckelements (5) angeordnet sind.

7. Fahrzeugleuchte nach einem der Ansprüche 1 bis 6, dadurch gekennzeichnet, daß die Leuchtdioden (3) auf der Rückseite (7) oder Vorderseite (10) des Abdeckelements (5) in Aufnahmen (14) angeordnet sind.

8. Fahrzeugleuchte nach einem der Ansprüche 1 bis 7, dadurch gekennzeichnet, daß die Leuchtdioden (3) und die Kontaktelemente (9) auf der Rückseite des Abdeckelements (5) durch einen Kleber, durch eine ausgeschäumte Rückseite des Abdeckelements (5), durch warmverformte pilzförmige Ansätze (29) oder Führungsansätze des Abdeckelements (5) gehaltert sind.

9. Fahrzeugleuchte nach einem der Ansprüche 1 bis 8, dadurch gekennzeichnet, daß die Leuchtdioden (3) mit ihren Kontakten (8) auf der Rückseite des Abdeckelements (5) an einem Randbereich (28) der Öffnungen (27) des Abdeckelements (5) anliegen.

10. Fahrzeugleuchte nach Anspruch 9, dadurch gekennzeichnet, daß die Kontaktelemente (9) entweder zwischen den Kontakten (8) der Leuchtdioden (3) oder auf der dem Abdeckelement (5) abgewandten Seite der Kontakte (8) der Leuchtdioden (3) angeordnet sind.

11. Fahrzeugleuchte nach Anspruch 9 oder 10, dadurch gekennzeichnet, daß die Leuchtdioden (3) mit Spiel in der jeweiligen Öffnung (27) des Abdeckelements (5) angeordnet sind.

12. Fahrzeugleuchte nach Anspruch 9 oder 10, dadurch gekennzeichnet, daß die Leuchtdioden auf der der Abschlußscheibe (4) zugewandten Vorderseite aus den Öffnungen (27) herausragen und jeweils in einem schalenförmigen Reflektor (30) des Abdeckelements (5) angeordnet sind.

13. Fahrzeugleuchte nach Anspruch 12, dadurch gekennzeichnet, daß eine von der Öffnung (27) und der Rückseite der Leuchtdioden (3) gebildeten Vertiefung mit Klebstoff (17) ausgefüllt ist.

14. Fahrzeugleuchte nach einem der Ansprüche 1 bis 13, dadurch gekennzeichet, daß das Abdeckelement (5) von einer rückwärtigen Gehäusewand gebildet ist oder ein im inneren des Gehäuses (2) angeordnetes Teil ist.

15. Fahrzeugleuchte nach einem der Ansprüche 1 bis 14, dadurch gekennzeichnet, daß die Öffung (27) von einer in das Abdeckelement (5) eingebrachten Vertiefung (14) gebildet ist.

16. Fahrzeugleuchte nach einem der Ansprüche 1 bis 15, dadurch gekennzeichet, daß die Kontakte (8) der Leuchtdioden (3) mittels Laserschweißen mit von Drähten gebildeten Kontaktelementen (9) verbunden sind.

17. Verfahren zur Montage einer Mehrzahl von Leuchtdioden (3) an einem Abdeckelement (5) eines Gehäuses (2) einer Fahrzeugleuchte (1), dadurch gekennzeichnet, daß die Leuchtdioden (3) in einer Fertigungsstraße vollautomatisch von einem Montageroboter in räumlicher Anordnung direkt auf einer Vorder- oder Rückseite des Abdeckelements (5) befestigt werden.

18. Verfahren nach Anspruch 17, dadurch gekennzeichnet, daß durch einen Montageroboter auf der Vorder- oder Rückseite (7) des Abdeckelements (5), die elektrische Verbindung zu den Leuchtdioden (3) hergestellt wird.
